# EUROPÄISCHE PATENTSCHRIFT

(11) **EP 2 810 830 B1**
(45) Veröffentlichungstag und Bekanntmachung des Hinweises auf die Patenterteilung: **30.03.2016**
(21) Anmeldenummer: 14163323.0
(22) Anmeldetag: 03.04.2014
(51) Int. Cl.: B60R 16/027

(54) **Verbindungsvorrichtung für ein Lenkrad eines Kraftfahrzeugs und Kraftfahrzeug**
Connecting device for a steering wheel of a motor vehicle and motor vehicle
Dispositif de liaison pour un volant de véhicule automobile et véhicule automobile

(30) Priorität: 06.06.2013 DE 102013009554
(43) Veröffentlichungstag der Anmeldung: 10.12.2014
(73) Patentinhaber: Valeo Schalter und Sensoren GmbH, 74321 Bietigheim-Bissingen (DE)
(72) Erfinder: Ullmann, Tim, 74376 Gemmrigheim (DE); Jaeckle, Daniela, 74535 Mainhardt-Huetten (DE); Schwarz, Viktoria, 71732 Tamm (DE)

(56) Entgegenhaltungen:
- EP-A1- 0 195 833

## Beschreibung

Die Erfindung betrifft eine Verbindungsvorrichtung zum Übertragen von elektrischen Signalen an und/oder von einem Lenkrad eines Kraftfahrzeugs, umfassend ein ortsfestes Bauteil zur ortsfesten Installation in dem Kraftfahrzeug sowie ein an dem ortsfesten Bauteil drehbar gelagertes Nabenteil zum Verbinden mit dem Lenkrad. Die Verbindungsvorrichtung umfasst des Weiteren ein an einem Lagerteil schwenkbar gelagertes Verriegelungselement, welches bei dem Verbinden des Nabenteils mit dem Lenkrad aus einer Montagestellung in eine Betriebsstellung verschwenkbar ist. Während in der Montagestellung ein Sperrriegel des Verriegelungselements die Drehung des Nabenteils gegenüber dem ortsfesten Bauteil blockiert, ist die Drehung des Nabenteils in der Betriebsstellung des Verriegelungselements freigegeben. Die Erfindung betrifft außerdem ein Kraftfahrzeug mit einer solchen Verbindungsvorrichtung.

Verbindungsvorrichtungen, welche zum Übertragen von elektrischen Signalen zwischen ortsfesten Komponenten einerseits und dem Lenkrad eines Kraftfahrzeugs andererseits dienen, sind bereits aus dem Stand der Technik in vielfältiger Ausgestaltung bekannt. Solche Verbindungsvorrichtungen beinhalten üblicherweise ein ortsfestes Bauteil bzw. ein Gehäuse, welches ortsfest in dem Kraftfahrzeug angebracht wird, etwa an einem Lenkstockmodul bzw. einem Gehäuse einer Lenkwelle. An dem ortsfesten Bauteil ist ein Nabenteil drehbar gelagert, welches mit dem Lenkrad drehfest verbunden werden kann. In dem ortsfesten Bauteil ist üblicherweise eine Wickelfeder bzw. ein so genannter Flachleiter angeordnet. Über diese Wickelfeder werden elektrische Signale - etwa elektrische Versorgungsspannungen - zwischen Einrichtungen einerseits, die sich im Lenkrad befinden, und Geräten andererseits übertragen, die ortsfest im Fahrzeug angeordnet sind. Über eine derartige Wickelfeder wird beispielsweise eine elektrische Heizung im Lenkrad mit elektrischer Energie versorgt. Des Weiteren kann auch ein Airbag im Lenkrad über die Wickelfeder angesteuert werden. Ein weiteres Beispiel stellen in das Lenkrad integrierte Bedienelemente dar, welche über die Wickelfeder mit Steuergeräten elektrisch verbunden sind, die sich außerhalb des Lenkrads befinden. Die Wickelfeder beinhaltet dabei typischerweise mehrere elektrische Leitungen, welche elektrisch voneinander isoliert sind. Die Wickelfeder selbst stellt ein flaches, federndes Kabel dar - ein Flachkabel.

Die Wickelfeder ist - wie bereits ausgeführt - üblicherweise in dem ortsfesten Bauteil untergebracht, welches ein Gehäuse darstellt. Die Wickelfeder ist dabei mit elektrischen Kontaktelementen versehen, die als Anschlüsse an dem Nabenteil bereitgestellt sind. Über diese Anschlüsse wird die Wickelfeder an die lenkradseitigen Komponenten elektrisch angebunden.

Bei der Montage des Lenkrads soll sichergestellt werden, dass die Drehbewegung des Nabenteils relativ zum Gehäuse bzw. zum ortsfesten Bauteil so lange blockiert wird, bis das Lenkrad mit dem Nabenteil verbunden wird. Zu diesem Zwecke wird im Stand der Technik bereits ein Verriegelungselement eingesetzt, mittels welchem die Drehbewegung des Nabenteils mechanisch verhindert bzw. verriegelt wird. Eine solche Lösung ist beispielsweise aus der EP 1 674 343 B1 bekannt. Bei der Montage des Lenkrads wird das Verriegelungselement in eine Betriebsstellung bzw. eine Freigabestellung gebracht, in welcher die Drehbewegung des Nabenteils relativ zum Gehäuse freigegeben wird. Das Verriegelungselement wird hier gegen die Federkraft einer Druckfeder bewegt. Als nachteilig an diesem Stand der Technik ist der Umstand anzusehen, dass aufgrund der Ausgestaltung des Federelements ein relativ großer Federweg benötigt wird, wodurch insgesamt relativ viel Bauraum beansprucht wird. Dieser steht jedoch insbesondere im Bereich eines Lenkrads nur eingeschränkt zur Verfügung.

Der Einsatz eines Verriegelungselements mit einer separaten Druckfeder ist des Weiteren aus dem Dokument US 2012/0011959 A1 bekannt.

In der DE 41 25 347 A1 wird vorgeschlagen, eine Schenkelfeder als Verriegelungselement einzusetzen und die Drehbewegung des Nabenteils mittels eines Schenkels der Feder zu blockieren. Auch hier wird für dieses Verriegelungselement relativ viel Bauraum insbesondere in axialer Richtung benötigt. Außerdem ist hier die benötigte Stabilität der Verriegelung nicht gegeben.

Eine Verbindungsvorrichtung der eingangs genannten Gattung ist außerdem aus der DE 696 08 537 T2 als bekannt zu entnehmen.

Des Weiteren ist aus der EP 0 195 833 A1 eine Verbindungsvorrichtung gemäß dem Oberbegriff des Anspruchs 1 bekannt. Als Verriegelungslement ist dabei eine federbelastete Zweiarmwippe vorgesehen die in einer Montagestellung mit einem Sperrarm die Drehung des Nabenteils blockiert, und beim Verbinden des Nabenteils mit dem Lenkrad gegen die Federkraft in eine Betriebsstellung verschwenkt wird und die Drehung des Nabenteils freigibt.

Es ist Aufgabe der Erfindung, eine im Vergleich zum Stand der Technik kompaktere Verbindungsvorrichtung zu schaffen, bei welcher die Drehung des Nabenteils mittels eines Verriegelungselements zuverlässig blockiert werden kann.

Diese Aufgabe wird erfindungsgemäß durch eine Verbindungsvorrichtung sowie durch ein Kraftfahrzeug mit den Merkmalen gemäß den jeweiligen unabhängigen Patentansprüchen gelöst. Vorteilhafte Ausführungen der Erfindung sind Gegenstand der abhängigen Patentansprüchen gelöst. Vorteilhafte Ausführungen der Erfindung sind Gegenstand der abhängigen Patentansprüche, der Beschreibung und der Figuren.

Eine erfindungsgemäße Verbindungsvorrichtung ist zum Übertragen von elektrischen Signalen an und/oder von einem Lenkrad eines Kraftfahrzeugs ausgebildet und umfasst ein ortsfestes Bauteil zur ortsfesten Installation bzw. Montage in dem Kraftfahrzeug sowie ein an dem ortsfesten Bauteil drehbar gelagertes Nabenteil, welches an das Lenkrad drehfest angekoppelt werden kann. Die Verbindungsvorrichtung umfasst des Weiteren ein an einem Lagerteil schwenkbar gelagertes Verriegelungselement, welches bei dem Verbinden des Nabenteils mit dem Lenkrad aus einer Montagestellung gegen eine Federkraft eines Federelements in eine Betriebsstellung verschwenkbar ist. Das Verriegelungselement ist dabei insbesondere unmittelbar durch das Lenkrad selbst bzw. seine Nabe betätigbar. In der Montagestellung des Verriegelungselements blockiert ein Sperrriegel des Verriegelungselements die Drehung des Nabenteils relativ zum ortsfesten Bauteil. Demgegenüber ist in der Betriebsstellung des Verriegelungselements die Drehung des Nabenteils freigegeben. Erfindungsgemäß ist vorgesehen, dass das Federelement als Schenkelfeder ausgebildet ist, welche um einen Grundkörper des Verriegelungselements gewickelt ist, und dass ein erster Schenkel der Schenkelfeder an dem Verriegelungselement und ein zweiter Schenkel der Schenkelfeder an dem Lagerteil abgestützt sind.

Durch eine derartige Ausgestaltung des Federelements als Schenkelfeder, deren erster Schenkel an dem Verriegelungselement selbst und zweiter Schenkel an dem Lagerteil fixiert sind, kann insgesamt eine kompakte und Bauraum sparende Verbindungsvorrichtung geschaffen werden. Einerseits fällt nämlich der Federweg des Federelements mit dem Schwenkweg des Verriegelungselements zusammen. Andererseits wird auch kein zusätzlicher Bauraum für das Federelement selbst benötigt, weil dieses um den Grundkörper des Verriegelungselements selbst gewickelt ist. Insbesondere im Vergleich zu einer Druckfeder, wie sie im Stand der Technik eingesetzt wird, kann somit relativ viel Bauraum, insbesondere in axialer Richtung, eingespart werden, der insbesondere im Bereich eines Lenkrads lediglich eingeschränkt zur Verfügung steht. Die Ausgestaltung des Federelements als Schenkelfeder hat außerdem den Vorteil, dass das Verriegelungselement aufgrund der Federkraft besonders sicher wieder in die Montagestellung gebracht werden kann, wenn das Lenkrad - etwa in einem Servicefall - abgenommen wird.

In einer Ausführungsform ist vorgesehen, dass das Lagerteil integral mit dem Nabenteil ausgebildet ist, sodass das Verriegelungselement an dem Nabenteil schwenkbar gelagert ist bzw. das Lagerteil quasi durch einen Bereich des Nabenteils gebildet ist. Eine solche Anordnung des Verriegelungselements direkt an dem Nabenteil hat den Vorteil, dass das Verriegelungselement bei der Montage des Lenkrads leicht zugänglich ist und somit unmittelbar durch das Lenkrad betätigt werden kann, sodass die Bewegung des Verriegelungselements in die Betriebsstellung quasi automatisch beim Einsetzen des Lenkrads in das Nabenteil erfolgt.

Es kann auch vorgesehen sein, dass der Grundkörper des Verriegelungselements, um welchen die Schenkelfeder gewickelt ist, zylinderförmig ausgebildet ist. Das Verriegelungselement kann dabei an dem Lagerteil um eine Zylinderlängsachse des zylindrischen Grundkörpers schwenkbar gelagert sein. Somit ist eine besonders stabile und betriebssichere Lagerung des Verriegelungselements an dem Lagerteil gewährleistet. Des Weiteren kann dadurch ein sicherer Sitz der Schenkelfeder an dem zylindrischen Grundkörper ermöglicht werden.

Das Lagerteil weist erfindungsgemäß eine Aufnahme auf, in welche der Grundkörper des Verriegelungselements eingesetzt ist. Der Grundkörper des Verriegelungselements ist somit in der Aufnahme des Lagerteils gleitend schwenkbar gelagert. Dies sorgt für eine robuste Lagerung des Verriegelungselements und folglich für eine entsprechend lange Lebensdauer der Verbindungsvorrichtung.

Das Lagerteil weist einen federnd ausgebildeten Haltearm auf, welcher - insbesondere mit seinem freien Ende - an dem Grundkörper des Verriegelungselements anliegt und mittels welchem der Grundkörper somit in der Aufnahme gehalten ist. Dieser Haltearm ist vorzugsweise einstückig mit dem Lagerteil, und insbesondere einstückig mit dem Nabenteil, ausgebildet. Ein derartiger Haltearm sorgt dafür, dass das Verriegelungselement bzw. sein Grundkörper fest und stabil innerhalb der genannten Aufnahme gehalten werden kann. Der Haltearm drückt nämlich mit anderen Worten den Grundkörper des Verriegelungselements in Richtung zur Aufnahme hin, sodass insgesamt ein sicherer Sitz des Grundkörpers in der Aufnahme gewährleistet ist. Durch die federnde Ausgestaltung des Haltearms ist außerdem gewährleistet, dass das Verriegelungselement aus der Aufnahme zerstörungsfrei herausgenommen und somit von dem Lagerteil demontiert werden kann.

Also kann in einer Ausführungsform vorgesehen sein, dass das Verriegelungselement zerstörungsfrei lösbar an dem Lagerteil angeordnet ist. Gleiche Nabenteile können somit sowohl für Verbindungsvorrichtungen mit einem Verriegelungselement als auch für solche Vorrichtungen genutzt werden, die ohne ein Verriegelungselement auskommen.

Es erweist sich als vorteilhaft, wenn das Verriegelungselement einen von dem Grundkörper abstehenden Betätigungsabschnitt aufweist, welcher mittels des Lenkrads bei dem Verbinden des Nabenteils mit dem Lenkrad betätigbar ist. Der Betätigungsabschnitt kann beispielsweise in Form einer Lasche bereitgestellt sein, welche von dem Grundkörper absteht und sich insbesondere in einen zylindrischen Hohlraum des Nabenteils hineinerstreckt, in welchen das Lenkrad eingesetzt werden kann. Beim Einsetzen des Lenkrads in den Hohlraum des Nabenteils wird der Betätigungsabschnitt somit direkt durch das Lenkrad selbst berührt und so betätigt, dass das Verriegelungselement in die Betriebsstellung verschwenkt wird.

Der erste Schenkel der Schenkelfeder kann insbesondere an dem Betätigungsabschnitt oder aber an dem Sperrriegel selbst fixiert sein. Insbesondere ist der erste Schenkel der Schenkelfeder in eine Aussparung des Betätigungsabschnitts oder des Sperrriegels aufgenommen und somit fixiert. Der zweite Schenkel der Schenkelfeder kann wiederum an dem Nabenteil fixiert sein, beispielsweise in eine entsprechende Aussparung in dem Nabenteil aufgenommen sein.

Die Verriegelung der Drehung des Nabenteils relativ zum ortsfesten Bauteil wird insbesondere dadurch ermöglicht, dass der Sperrriegel des Verriegelungselements in der Montagestellung in eine Vertiefung eingreift und somit mit einer die Vertiefung begrenzenden Wand blockierend zusammenwirkt. Diese Vertiefung ist vorzugsweise in dem ortsfesten Bauteil ausgebildet. Wird das Verriegelungselement in die Betriebsstellung verschwenkt, so wird der Sperrriegel aus der Vertiefung herausbewegt, sodass die Drehbewegung des Nabenteils ermöglicht wird. Durch einen derartigen Formschluss ist eine besonders zuverlässige Verriegelung gewährleistet.

Ein erfindungsgemäßes Kraftfahrzeug, insbesondere Personenkraftwagen, umfasst eine erfindungsgemäße Verbindungsvorrichtung.

Ein erfindungsgemäßes Kraftfahrzeug, insbesondere Personenkraftwagen, umfasst eine erfindungsgemäße Verbindungsvorrichtung.

Weitere Merkmale der Erfindung ergeben sich aus den Ansprüchen, den Figuren und der Figurenbeschreibung.
Die Erfindung wird nun anhand eines bevorzugten Ausführungsbeispiels sowie unter Bezugnahme auf die beigefügten Zeichnungen näher erläutert.

Es zeigen:
- Fig. 1: in schematischer und perspektivischer Darstellung eine Verbindungsvorrichtung gemäß einer Ausführungsform der Erfindung, wobei sich ein Verriegelungselement in einer Montagestellung befindet;
- Fig. 2: in schematischer und perspektivischer Darstellung die Verbindungsvorrichtung, wobei sich das Verriegelungselement in einer Betriebsstellung befindet;
- Fig. 3: in schematischer Darstellung eine Seitenansicht bzw. Schnittansicht durch die Verbindungsvorrichtung gemäß Fig. 1; und
- Fig. 4: in schematischer Darstellung eine Seitenansicht bzw. Schnittansicht durch die Verbindungsvorrichtung gemäß Fig. 2.

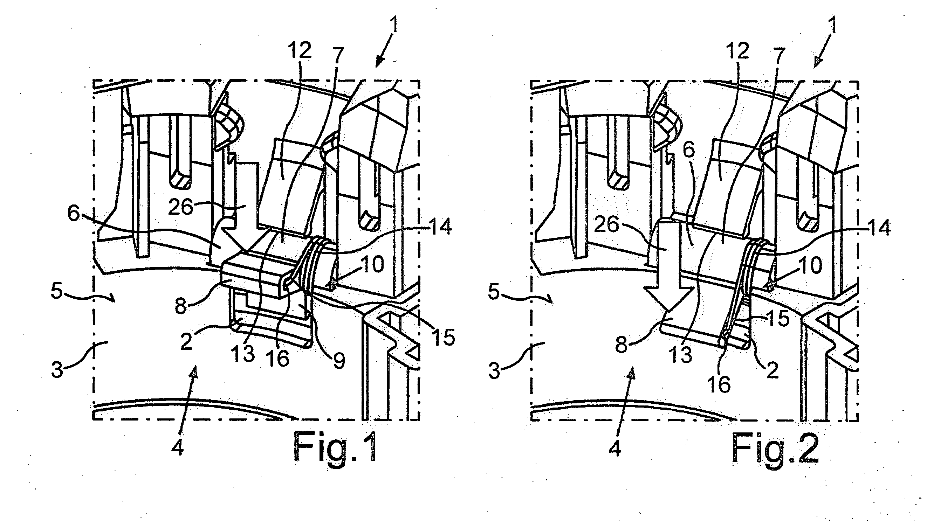

In Fig. 1 sind Teilkomponenten einer insgesamt mit 1 bezeichneten Verbindungsvorrichtung gemäß einer Ausführungsform der Erfindung gezeigt. Die Verbindungsvorrichtung 1 umfasst ein als Gehäuse ausgebildetes ortfestes Bauteil 2, welches zur ortsfesten Montage in einem Personenkraftwagen ausgebildet ist, etwa an einem Lenkstockmodul oder dergleichen. An dem ortsfesten Bauteil 2 ist ein Nabenteil 3 drehbar gelagert. Das Nabenteil 3 hat einen zylindrischen Hohlraum 4, welcher durch einen radialen Innenumfang 5 des Nabenteils 3 radial nach außen begrenzt ist. Das Nabenteil 3 wird mit einem Lenkrad des Personenkraftwagens drehfest gekoppelt, wobei das Lenkrad bzw. eine Lenkradnabe in den Hohlraum 4 axial eingeführt wird.

In dem ortsfesten Bauteil 2 ist in an sich bekannter Weise eine Wickelfeder angeordnet, welche zum Übertragen von elektrischen Signalen zwischen dem Lenkrad einerseits und Einrichtungen andererseits dient, die ortsfest im Fahrzeug angeordnet sind. Diese Wickelfeder ist über nicht dargestellte Anschlüsse mit dem Lenkrad koppelbar.

Bevor das Lenkrad in den Hohlraum 4 eingesetzt und somit fertig montiert wird, soll sichergestellt werden, dass sich das Nabenteil 3 relativ zum ortsfesten Bauteil 2 nicht drehen darf. Zu diesem Zwecke beinhaltet die Verbindungsvorrichtung 1 ein Verriegelungselement 6, welches insgesamt einstückig ausgebildet ist und einen zylinderförmigen Grundkörper 7 aufweist, von welchem ein Betätigungsabschnitt 8 sowie separat dazu ein Sperrriegel 9 radial nach außen abstehen. Der Grundkörper 7 ist in eine in dem Nabenteil 3 ausgebildete, als axiale Vertiefung ausgeführte Aufnahme 10 axial eingesetzt und dort schwenkbar um eine Zylinderlängsachse 11 des Grundkörpers 7 gelagert. Der Grundkörper 7 ist dabei gleitend in der Aufnahme 10 angeordnet. Um den Grundkörper 7 sicher in der Aufnahme 10 halten zu können, weist das Nabenteil 3 einen federnden Haltearm 12 auf, der in Form einer Lasche bzw. Zunge ausgebildet ist und in Richtung zum Hohlraum 4 weist. Ein freies Ende 13 des Haltearms 12 liegt an einem Außenumfang des zylindrischen Grundkörpers 7 an, sodass der Haltearm 12 den Grundkörper 7 in der Aufnahme 10 sicher hält. Der Haltearm 12 sorgt also für eine sichere radiale Fixierung des zylindrischen Grundkörpers 7. Durch die Federwirkung des Haltearms 12 ist das Verriegelungselement 6 zerstörungsfrei lösbar in der Aufnahme 10 gelagert und kann somit demontiert werden.

Im Ausführungsbeispiel fungiert das Nabenteil 3 also als ein Lagerteil, an welchem das Verriegelungselement 6 schwenkbar gelagert ist.

Um den zylindrischen Grundkörper 7 ist eine Schenkelfeder 14 gewickelt. Ein erster Schenkel 15 der Schenkelfeder 14 ist in einer Aussparung 16 fixiert, die in dem Betätigungsabschnitt 8 ausgebildet ist. Der erste Schenkel 15 ist somit an dem Betätigungsabschnitt 8 abgestützt. Ein in den Figuren nicht näher dargestellter zweiter Schenkel der Schenkelfeder 14 ist wiederum an dem Nabenteil 3 fixiert.

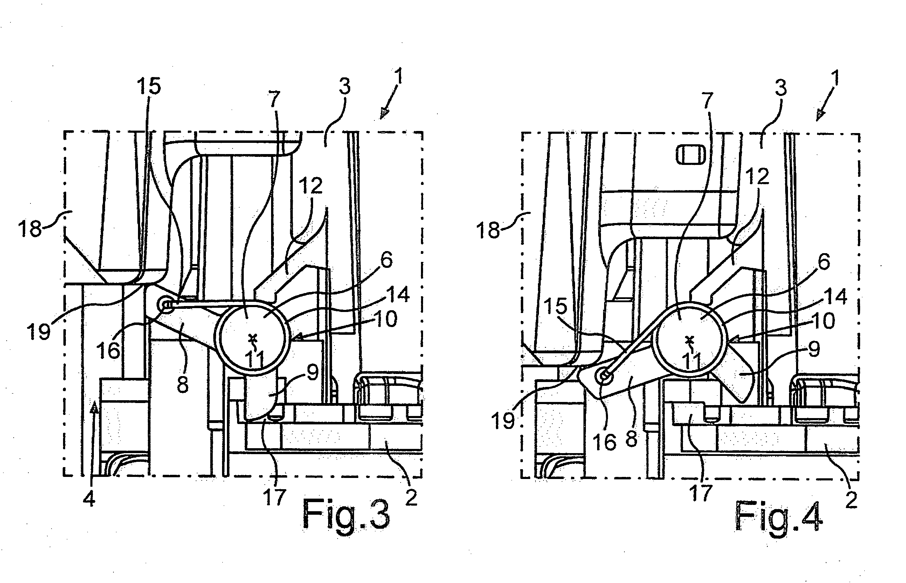

Das Verriegelungselement 6 wird beim Einsetzen des Lenkrads in den Hohlraum 4 aus einer in den Fig. 1 und 3 dargestellten Montagestellung gegen die Federkraft der Schenkelfeder 14 in eine in den Fig. 2 und 4 gezeigte Betriebsstellung gemäß der Pfeildarstellung 26 verschwenkt. Die Montagestellung stellt dabei eine Ruhestellung des Verriegelungselements 6 dar, in welcher sich der Sperrriegel 9 in einer im ortsfesten Bauteil 2 ausgebildeten Vertiefung 17 befindet. Der Sperrriegel 9 greift somit in der Montagestellung in die Vertiefung 17 hinein und blockiert somit die Drehbewegung des Nabenteils 3. Beim Einsetzen des Lenkrads in den Hohlraum 4 betätigt das Lenkrad den Betätigungsabschnitt 8 des Verriegelungselements 6 und drückt den Betätigungsabschnitt 8 so, dass das Verriegelungselement 6 in die Betriebsstellung verschwenkt wird, in welcher sich der Sperrriegel 9 außerhalb der Vertiefung 17 befindet und die Drehbewegung des Nabenteils 3 freigibt. In der Betriebsstellung ist das Verriegelungselement 6 mit der Federkraft vorgespannt, sodass nach einem erneuten Abnehmen des Lenkrads das Verriegelungselement 6 selbsttätig wieder in die Montagestellung bewegt wird.

In den Fig. 3 und 4 ist gezeigt, wie der Betätigungsabschnitt 8 des Verriegelungselements 6 beim Einsetzen eines Lenkrads 18 in den Hohlraum 4 betätigt wird. Dabei berührt eine axiale Stirnseite 19 des Lenkrads 18 bzw. einer Lenkradnabe den Betätigungsabschnitt 8 des Verriegelungselements 6 und drückt somit das Verriegelungselement 6 in seine Betriebsstellung gemäß Fig. 4. Der Sperrriegel 9 wird dabei aus der Vertiefung 17 herausbewegt.

## Patentansprüche

1. Verbindungsvorrichtung (1) zum Übertragen von elektrischen Signalen an und/oder von einem Lenkrad (18) eines Kraftfahrzeugs, mit einem ortsfesten Bauteil (2) zur ortsfesten Installation in dem Kraftfahrzeug, mit einem an dem ortsfesten Bauteil (2) drehbar gelagerten Nabenteil (3) zum Verbinden mit dem Lenkrad (18), und mit einem an einem Lagerteil (3) schwenkbar gelagerten Verriegelungselement (6), welches bei dem Verbinden des Nabenteils (3) mit dem Lenkrad (18) aus einer Montagestellung, in welcher ein Sperrriegel (9) des Verriegelungselements (6) die Drehung des Nabenteils (3) blockiert, gegen eine Federkraft eines Federelements (14) in eine Betriebsstellung verschwenkbar ist, in welcher die Drehung des Nabenteils (3) freigegeben ist,
**dadurch gekennzeichnet, dass**
das Federelement (14) als Schenkelfeder (14) ausgebildet ist, welche um einen Grundkörper (7) des Verriegelungselements (6) gewickelt ist, wobei ein erster Schenkel (15) der Schenkelfeder (14) an dem Verriegelungselement (6) und ein zweiter Schenkel der Schenkelfeder (14) an dem Lagerteil (3) abgestützt sind wobei das Lagerteil (3) eine Aufnahme (10) aufweist, in welche der Grundkörper (7) des Verriegelungselements (6) eingesetzt ist und das Lagerteil (3) einen federnd ausgebildeten Haltearm (12) aufweist, welcher an dem Grundkörper (7) des Verriegelungselements (6) anliegt und mittels welchem der Grundkörper (7) in der Aufnahme (10) gehalten ist.

2. Verbindungsvorrichtung (1) nach Anspruch 1,
**dadurch gekennzeichnet, dass**
das Lagerteil (3) integral mit dem Nabenteil (3) ausgebildet ist, sodass das Verriegelungselement (6) an dem Nabenteil (3) schwenkbar gelagert ist.

3. Verbindungsvorrichtung (1) nach Anspruch 1 oder 2,
**dadurch gekennzeichnet, dass**
der Grundkörper (7) des Verriegelungselements (6) zylinderförmig ausgebildet ist und das Verriegelungselement (6) an dem Lagerteil (3) um eine Zylinderlängsachse (11) des Grundkörpers (7) schwenkbar gelagert ist.

4. Verbindungsvorrichtung (1) nach einem der vorhergehenden Ansprüche,
**dadurch gekennzeichnet, dass**
das Verriegelungselement (6) einen von dem Grundkörper (7) abstehenden Betätigungsabschnitt (8) aufweist, welcher mittels des Lenkrads (18) bei dem Verbinden des Nabenteils (3) mit dem Lenkrad (18) betätigbar ist.

5. Verbindungsvorrichtung (1) nach einem der vorhergehenden Ansprüche,
**dadurch gekennzeichnet, dass**
der erste Schenkel (15) der Schenkelfeder (14) an dem Betätigungsabschnitt (8) oder dem Sperrriegel (9) fixiert ist.

6. Verbindungsvorrichtung (1) nach einem der vorhergehenden Ansprüche,
**dadurch gekennzeichnet, dass**
die Verbindungsvorrichtung (1) eine, insbesondere in dem ortsfesten Bauteil (2) ausgebildete, Vertiefung (17) aufweist, in welche der Sperrriegel (9) in der Montagestellung des Verriegelungselements (6) eingreift, um die Drehung des Nabenteils (3) zu blockieren.

7. Kraftfahrzeug mit einer Verbindungsvorrichtung (1) nach einem der vorhergehenden Ansprüche

## Claims

1. Connecting device (1) for transmitting electric signals to and/or from a steering wheel (18) of a motor vehicle, with a positionally fixed component (2) for the positionally fixed installation in the motor vehicle, with a hub part (3), which is mounted rotatably on the positionally fixed component (2), for connection to the steering wheel (18), and with a locking element (6) which is mounted pivotably on a bearing part (3) and, when the hub part (3) is connected to the steering wheel (18), is pivotable from an installation position, in which a blocking bolt (9) of the locking element (6) blocks the rotation of the hub part (3), counter to a spring force of a spring element (14) into an operating position, in which the rotation of the hub part (3) is released, **characterized in that** the spring element (14) is designed as a leg spring (14) which is wound around a basic body (7) of the locking element (6), wherein a first leg (15) of the leg spring (14) is supported on the locking element (6) and a second leg of the leg spring (14) is supported on the bearing part (3), wherein the bearing part (3) has a receptacle (10) into which the basic body (7) of the locking element (6) is inserted, and the bearing part (3) has a holding arm (12) which is of resilient design, bears against the basic body (7) of the locking element (6) and by means of which the basic body (7) is held in the receptacle (10).

2. Connecting device (1) according to Claim 1, **characterized in that** the bearing part (3) is formed integrally with the hub part (3), and therefore the locking element (6) is mounted pivotably on the hub part (3).

3. Connecting device (1) according to Claim 1 or 2, **characterized in that** the basic body (7) of the locking element (6) is of cylindrical design, and the locking element (6) is mounted on the bearing part (3) so as to be pivotable about a cylinder longitudinal axis (11) of the basic body (7).

4. Connecting device (1) according to one of the preceding claims, **characterized in that** the locking element (6) has an actuating portion (8) which protrudes from the basic body (7) and which is actuable by means of the steering wheel (18) when the hub part (3) is connected to the steering wheel (18).

5. Connecting device (1) according to one of the preceding claims, **characterized in that** the first leg (15) of the leg spring (14) is fixed on the actuating portion (8) or on the blocking bolt (9).

6. Connecting device (1) according to one of the preceding claims, **characterized in that** the connecting device (1) has a depression (17) which is formed in particular in the positionally fixed component (2) and in which the blocking bolt (9) engages in the installation position of the locking element (6) in order to block the rotation of the hub part (3).

7. Motor vehicle with a connecting device (1) according to one of the preceding claims.

## Revendications

1. Dispositif de liaison (1) pour transmettre des signaux électriques à et/ou depuis un volant de direction (18) d'un véhicule automobile, comprenant un composant fixe (2) pour l'installation fixe dans le véhicule automobile, une partie de moyeu (3) supportée de manière rotative sur le composant fixe (2) pour la connexion au volant de direction (18) et un élément de verrouillage (6) verrouillé de manière pivotante sur une partie de palier (3), lequel, lors de la connexion de la partie de moyeu (3) au volant de direction (18), peut pivoter d'une position de montage dans laquelle une barrette de verrouillage (9) de l'élément de verrouillage (6) bloque la rotation de la partie de moyeu (3) à l'encontre d'une force de ressort d'un élément de ressort (14), dans une position fonctionnelle dans laquelle la rotation de la partie de moyeu (3) est libérée,
**caractérisé en ce que**
l'élément de ressort (14) est réalisé sous forme de ressort à branches (14) qui est enroulé autour d'un corps de base (7) de l'élément de verrouillage (6), une première branche (15) du ressort à branches (14) étant supportée sur l'élément de verrouillage (6) et une deuxième branche du ressort à branches (14) étant supportée sur la partie de palier (3), la partie de palier (3) présentant un logement (10) dans lequel est inséré le corps de base (7) de l'élément de verrouillage (6) et la partie de palier (3) présentant un bras de retenue (12) réalisé de manière élastique, lequel s'applique contre le corps de base (7) de l'élément de verrouillage (6) et au moyen duquel le corps de base (7) est retenu dans le logement (10).

2. Dispositif de liaison (1) selon la revendication 1,
**caractérisé en ce que**
la partie de palier (3) est réalisée intégralement avec la partie de moyeu (3), de telle sorte que l'élément de verrouillage (6) soit supporté de manière à pouvoir pivoter au niveau de la partie de moyeu (3).

3. Dispositif de liaison (1) selon la revendication 1 ou 2,
**caractérisé en ce que**
le corps de base (7) de l'élément de verrouillage (6) est réalisé sous forme cylindrique et l'élément de verrouillage (6) est supporté sur la partie de palier (3) de manière à pouvoir pivoter autour d'un axe longitudinal de cylindre (11) du corps de base (7).

4. Dispositif de liaison (1) selon l'une quelconque des revendications précédentes,
**caractérisé en ce que**
l'élément de verrouillage (6) présente une portion d'actionnement (8) faisant saillie depuis le corps de base (7), laquelle peut être actionnée au moyen du volant de direction (18) lors de la connexion de la partie de moyeu (3) au volant de direction (18).

5. Dispositif de liaison (1) selon l'une quelconque des revendications précédentes,
**caractérisé en ce que**
la première branche (15) du ressort à branches (14) est fixée à la portion d'actionnement (8) ou à la barrette de verrouillage (9).

6. Dispositif de liaison (1) selon l'une quelconque des revendications précédentes,
**caractérisé en ce que**
le dispositif de liaison (1) présente un renfoncement (17) réalisé notamment dans le composant fixe (2), dans lequel la barrette de verrouillage (9) s'engage dans la position de montage de l'élément de verrouillage (6) afin de bloquer la rotation de la partie de moyeu (3).

7. Véhicule automobile comprenant un dispositif de liaison (1) selon l'une quelconque des revendications précédentes.
